# EUROPEAN PATENT APPLICATION

(11) **EP 3 280 175 A1**
(43) Date of publication of application: **07.02.2018**
(21) Application number: 16772996.1
(22) Date of filing: 30.03.2016
(51) Int. Cl.: H04W 28/12, H04W 88/16, H04W 92/02

(54) **GATEWAY DEVICE AND COMMUNICATION METHOD**

(30) Priority: 31.03.2015 JP 2015074188
(71) Applicant: NTT DOCOMO, INC., Chiyoda-ku Tokyo 100-6150 (JP)
(72) Inventor: KOSHIMIZU, Takashi, Tokyo 100-6150 (JP); KUNZMANN, Gerald, 80687 Munich (DE); THAKOLSRI, Srisakul, 80687 Munich (DE)
(74) Representative: Hoffmann Eitle
(86) International application number: PCT/JP2016/060451
(87) International publication number: WO 2016/159115

(57) **Abstract**

A gateway apparatus provided between a radio base station in a mobile communication network and a terminal apparatus, including: notification means configured to notify a proxy apparatus, connected to the mobile communication network as an external apparatus, of information indicating that the gateway apparatus is activated; and storing control means configured to temporarily store data sequentially received from the terminal apparatus in data storage means, and after that, to transmit the data stored in the data storage means to the proxy apparatus.

## Description

### TECHNICAL FIELD

The present invention relates to a technique for accommodating a terminal used for M2M communication in a mobile communication network to perform efficient communication between the terminal and an external apparatus.

### BACKGROUND ART

In recent years, study of M2M (Machine-to-Machine) communication is progressing in which communication is executed between machines that are connected to a communication network without operation by a human so that proper control of machines and the like are automatically performed. For example, in 3GPP, standardization of a communication standard on M2M is progressing as a name of MTC (Machine Type Communication). Also, M2M communication may be also called IoT (Internet of. Things), M2M (Machine to Machine), USN (Ubiquitous Sensor Network) or the like.

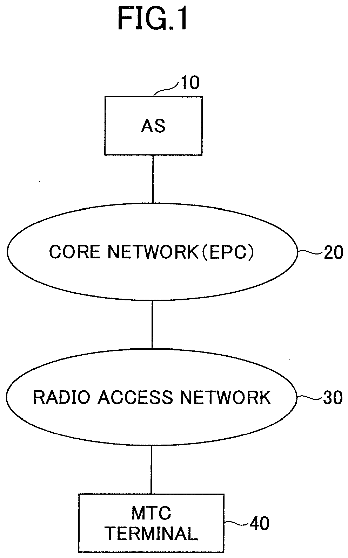

Fig. 1 shows an example of a network configuration in a case where an MTC terminal 40 is accommodated in a mobile communication network. In the example shown in Fig. 1, only one MTC terminal 40 is shown. However, this merely shows an example, and many MTC terminals 40 are connected actually.

The network shown in Fig. 1 includes a radio access network 30 and a core network 20. The radio access network 30 is formed by a radio base station such as an eNB (eNodeB), for example. Also, the core network 20 is an EPC (Evolved Packet Core), for example, and includes an MME, an S-GW, a P-GW and the like. An AS (application server) 10 which is an external apparatus is connected to the core network 20 via a PDN (packet data network). Although Fig. 1 shows only one AS 10, a plurality of ASs 10 may exist.

As one of use cases of the MTC terminal 40, there is an example in which mobile MTC terminals 40 having a sensor function are placed in a factory and the like. In this case, for example, the MTC terminal 40 periodically notifies the AS 10 of a sensor measurement value.

### RELATED ART DOCUMENT

### [NON PATENT DOCUMENT]

[NON PATENT DOCUMENT 1] M2M Communications -A System Approach-2012 WILEY, ISBN: 978-1-119-99475-6. David Boswarthck, Omar Elloumi, Oliver Hersent.
[NON PATENT DOCUMENT 2] 3GPP S2-141678

### SUMMARY OF THE INVENTION

### PROBLEM TO BE SOLVED BY THE INVENTION

In M2M communication, it is assumed that an enormous number of MTC terminals are used. Thus, the MTC terminal is assumed to become a terminal having a limited function with a small battery capacity in order to reduce the cost. Also, different from a general mobile terminal that is used by a human, it is considered that the MTC terminal has a power saving mode (PSM) to reduce battery consumption without occurrence of frequent communication.

In consideration of such characteristics of the MTC terminal, it is proposed to provide a NW with a proxy having a function for receiving an instruction from an AS and responding on behalf of the MTC terminal which is in a sleep state (non-patent documents 1, 2).

Like sensors placed in a factory and the like as mentioned above, in many use cases assumed in M2M, it is considered that many MTC terminals mainly performing uplink (UL) communication are accommodated in a mobile communication network. However, in the above-mentioned conventional techniques, no technique is proposed for efficiently accommodating the MTC terminal in a mobile communication network.

The present invention is contrived in view of the above points, and an object of the present invention is to provide a technique for enabling a terminal apparatus that performs communication with an external apparatus connected to a mobile communication network to be efficiently accommodated in the mobile communication network.

### MEANS FOR SOLVING THE PROBLEM

According to an embodiment of the present invention, there is provided a gateway apparatus provided between a radio base station in a mobile communication network and a terminal apparatus, including:
notification means configured to notify a proxy apparatus, connected to the mobile communication network as an external apparatus, of information indicating that the gateway apparatus is activated; and
storing control means configured to temporarily store data sequentially received from the terminal apparatus in data storage means, and after that, to transmit the data stored in the data storage means to the proxy apparatus.

According to an embodiment of the present invention, there is provided a communication method executed by a gateway apparatus provided between a radio base station in a mobile communication network and a terminal apparatus, including:
a notification step of notifying a proxy apparatus, connected to the mobile communication network as an external apparatus, of information indicating that the gateway apparatus is activated; and
a storing control step of temporarily storing data sequentially received from the terminal apparatus in data storage means, and after that, transmitting the data stored in the data storage means to the proxy apparatus.

### EFFECT OF THE PRESENT INVENTION

According to an embodiment of the present invention, there is provided a technique for enabling a terminal apparatus that performs communication with an external apparatus connected to a mobile communication network to be efficiently accommodated in the mobile communication network.

### BRIEF DESCRIPTION OF THE DRAWINGS

Fig. 1 is a diagram showing a configuration example of a network that accommodates an MTC terminal;
Fig. 2 is a block diagram of a communication system in an embodiment of the present invention;
Fig. 3 is a sequence diagram for explaining cashing/buffering function of an MTC-GW 100 in a first embodiment;
Fig. 4 is a sequence diagram for explaining a PSM processing function of the MTC-GW 100 in the first embodiment;
Fig. 5 is a sequence diagram for explaining cooperation processing between the MTC-GW 100 and a NW proxy apparatus 200 in the first embodiment;
Fig. 6 is a block diagram of the MTC-GW 100 in the first embodiment;
Fig. 7 is a block diagram of the NW proxy apparatus 200 in the first embodiment;
Fig. 8 is a sequence diagram for explaining a bearer setting function in a second embodiment;
Fig. 9 is a diagram for explaining a function of SCEF;
Fig. 10 is a diagram for explaining a concept of a raw data processing function in the second embodiment;
Fig. 11 is a sequence diagram for explaining the raw data processing function in the second embodiment;
Fig. 12 is a block diagram of the MTC-GW 100 in the second embodiment;
Fig. 13 is a diagram showing a HW configuration example of the MTC-GW 100.

### EMBODIMENTS FOR CARRYING OUT THE INVENTION

In the following, an embodiment of the present invention is described with reference to figures. The embodiment described below is merely an example, and the embodiment to which the present invention is applied is not limited to the embodiment below. For example, although the mobile communication network is assumed to be a scheme complying with LTE, the present invention can be applied not only to LTE but also to other schemes. Also, in the present embodiment, although an MTC terminal is used as an example of a terminal apparatus, the type of the terminal apparatus to which the present invention can be applied is not limited to the MTC terminal.

### (System configuration)

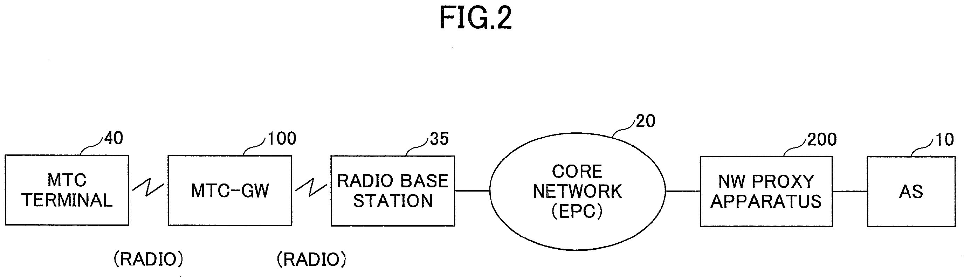

Fig. 2 shows a configuration example of a communication system in an embodiment (common to the first and the second embodiments) of the present invention. The configuration shown in Fig. 2 has the same configuration shown in Fig. 1 for the parts of the radio access network and the core network. However, in Fig. 2, in order to show connection configuration more clearly, the part of the radio access network is shown as a radio base station 35. The radio base station 35 is an eNB having a radio communication function of LTE, but, it is not limited to this.

As shown in Fig. 2, in the communication system of the present embodiment, an MTC-GW (MTC gateway apparatus) 100 is connected to the radio base station 35 by radio. Also, a NW (network) proxy apparatus 200 is connected between the core network 20 and the AS (application server) 10.

The MTC-GW 100 can be connected with a plurality of MTC terminals 40 by radio. However, in Fig. 2, one MTC terminal 40 is shown as an representative.

Although the MTC terminal 40 includes a radio communication function similar to that of a mobile telephone (UE) as a basic function, the function is limited compared with a general mobile telephone. Also, the MTC terminal 40 includes a function for entering a power saving mode (to be referred to as PSM hereinafter) when there is no data transmission and reception to reduce power consumption.

The MTC-GW 100 is a gateway apparatus configured to relay communication between the MTC terminal 40 and the radio base station 35. Although the scheme for relaying is not limited to a specific scheme, a scheme for performing relaying in an IP layer (layer 3 or layer 2 transferring scheme) can be used, for example.

Also, the MTC-GW 100 is connected with the radio base station 35 by radio using a radio interface protocol such as LTE and the like. The radio connection scheme between the MTC-GW 100 and the MTC terminal 40 is not limited to a specific scheme, and, for example, they may be connected by a radio interface protocol such as LTE and the like, or they may be connected by other wide area radio schemes. Also, the MTC-GW 100 and the MTC terminal 40 may be connected by near field radio communication.

The NW proxy apparatus 200 of the present embodiment is an apparatus having a proxy function for performing communication on behalf of the MTC terminal 40. Also, from the viewpoint of the MTC terminal 40, the NW proxy apparatus 200 is a kind of an external apparatus of the core network 20 like an AS. The NW proxy apparatus 200 is an SCS proxy (Service Capability Server Proxy), for example, but not limited to this. Any proxy apparatus may be used.

In the following, the function of the MTC-GW 100 is described in more detail. The MTC-GW 100 in the present embodiment mainly includes, as distinguishing functions, (1) cashing/buffering function, (2) PSM processing function, (3) NW proxy apparatus cooperation function, (4) bearer setting method determination function, and (5) raw data processing function.

In the following, (1) cashing/buffering function, (2) PSM processing function, and (3) NW proxy apparatus cooperation function are described as a first embodiment, and (4) bearer setting method determination function, and (5) raw data processing function are described as a second embodiment.

By the way, as to cashing and buffering, cashing includes a meaning of holding data for reuse in preparation for a request from another apparatus, and buffering includes a meaning of storing data until a bunch of data is stored (for transmission) as a setup of transmission and reception of data. However, both are the same in that data is temporarily stored in storage means, so "buffering" may be used instead of "cashing".

### <(1)Cashing/buffering function>

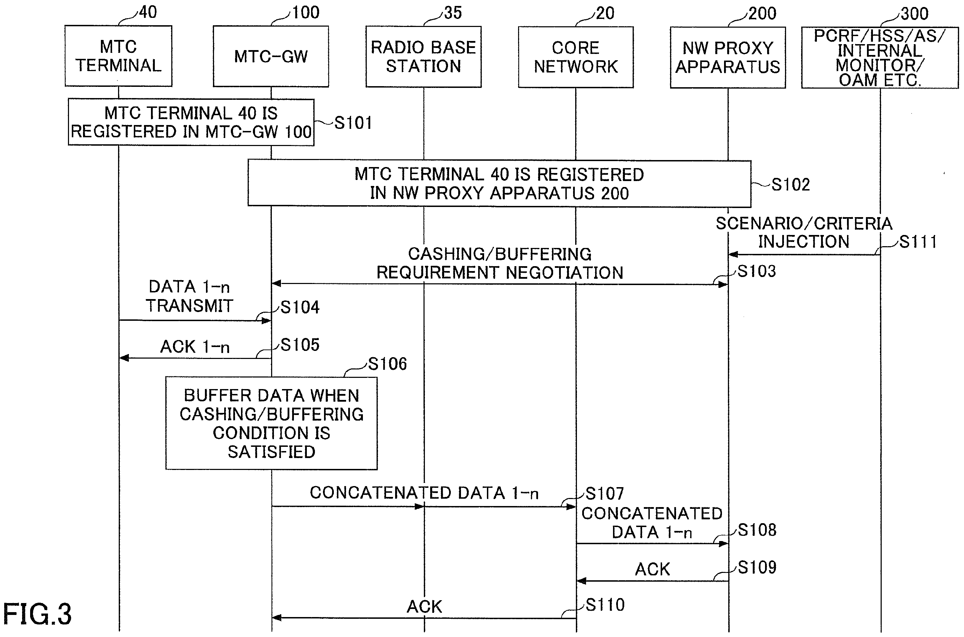

An operation example related to cashing/buffering of the MTC-GW 100 is described with reference to a sequence diagram shown in Fig. 3.

The MTC terminal 40 performs registration to the MTC-GW 100 (S101), and registration of the MTC terminal 40 is performed from the MTC-GW 100 to the NW proxy apparatus 200 (S102).

Registration of the MTC terminal 40 in the MTC-GW 100 and the NW proxy apparatus 200 is, for example, to store a terminal ID (terminal identifier) and an address (IP address/MAC address and the like) of the MTC terminal 40 in a table. By performing such a registration, for example, when receiving data including the terminal ID, the data can be transmitted to the address of the MTC terminal 40.

Also, in the NW proxy apparatus 200, registration of the MTC-GW 100 is performed beforehand, so that, in the registration of step S102, the NW proxy apparatus 200 stores registration information of the MTC terminal 40 and registration information (ID, address and the like) of the MTC-GW 100 that is a transmission source of the registration information by associating them with each other. Accordingly, for example, when the MTC terminal 40 is connected to the MTC-GW 100, the NW proxy apparatus 200 can transmit data addressed to the MTC terminal 40 received from the AS 10 to the MTC-GW 100 that accommodates the MTC terminal 40.

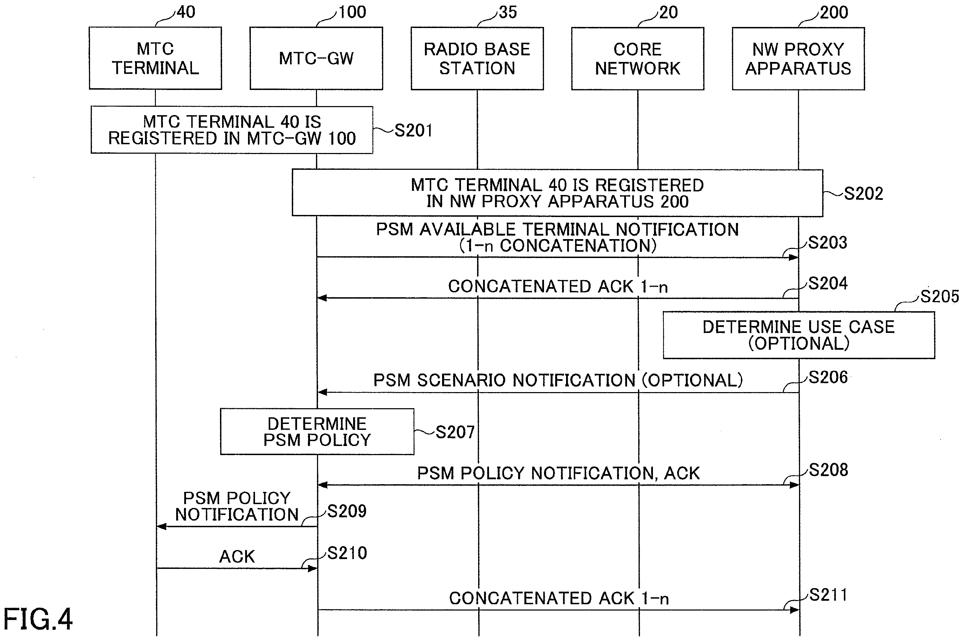

The above-mentioned processing on the registration is basically the same also for sequence diagrams after Fig. 4. Thus, after Fig. 4, registration processing is described simply.

In step S103 of Fig. 3, the NW proxy apparatus 200 and the MTC-GW 100 negotiate on a condition (criteria, scenario and the like) for performing cashing/buffering. The condition may be a condition of an individual MTC terminal that the MTC-GW 100 accommodates, or may be a condition common to a plurality of MTC terminals.

As shown in Fig. 3, negotiation can be performed by bidirectional transmission and reception of information. For example, exchange can be considered in which a condition is notified from the NW proxy apparatus 200 to the MTC-GW 100, so that the MTC-GW 100 transmits a request for changing the condition to the NW proxy apparatus 200. Also, there is exchange in which capability information is notified from the MTC-GW 100 to the NW proxy apparatus 200, so that the NW proxy apparatus 200 notifies the MTC-GW 100 of a condition appropriate for the capability. Also, instead of bi-directional, unidirectional notification may be performed from the NW proxy apparatus 200 to the MTC-GW 100.

Also, before the negotiation of step S103, scenario/criteria injection (step S111) may be performed from an entity such as PCRF/HSS/AS/internal monitor/OAM and the like shows as 300 of Fig. 3 to the NW proxy apparatus 200.

The condition may be referred to as "control information". In the following, description is given assuming that the condition is for one MTC terminal 40. As to a notification method of the condition, it may be an operation in which a condition is notified from the AS 10 to the NW proxy apparatus 200 so that the NW proxy apparatus 200 transfers the condition, or, the NW proxy apparatus 200 may have a function for determining a condition, so that the NW proxy apparatus 200 may determine the condition and notify the MTC-GW 100 of the condition.

This condition is, for example, a time cycle for performing buffering (time cycle/time interval for executing data transmission to the NW proxy apparatus 200), a buffer amount that becomes a trigger for executing data transmission to the NW proxy apparatus 200, and the like. The latter one means that, when data of the buffer amount is buffered, data transmission to the NW proxy apparatus 200 is executed.

Also, as a condition, a condition of a format of a rule or a scenario may be used, in which, for example, if the number of pieces of uplink data (packets) transmitted from the MTC terminal 40 is equal to or less than a threshold in a most recent past period (time length) that is predetermined at a time point when the condition is determined, buffering is performed, so that data transmission is performed after a predetermined amount of data is buffered, and if the number of pieces of data is greater than the threshold, buffering is not performed. The condition is a condition in consideration of transmitting data, in a lump (by concatenating pieces of data), from the MTC terminal 40 by which frequency of data transmission is low so as to efficiently utilize resources of the radio access network (RAN).

Also, the condition may be a condition to always buffer uplink data transmitted from the MTC terminal 40 and to perform data transmission after a predetermined amount of data is buffered. Following processing is assumed to use such a condition, and up to n pieces of data are buffered. By the way, the n pieces of data can be considered to be n pieces of data for each individual MTC terminal, or can be considered to be n pieces of data received by a plurality of MTC terminals as a whole.

In step S104 and step S105, data is sequentially transmitted from the MTC terminal 40 to the MTC-GW 100, so that ACK is returned. The MTC-GW 100 buffers n pieces of data of 1∼n transmitted from the MTC terminal 40 (step S106), then, at the time when n pieces of data are buffered, the MTC-GW 100 transmits the n pieces of data by concatenating them. That is, the pieces of data are transmitted in a lump. The concatenated data is transmitted to the NW proxy apparatus 200 via the radio base station 35 and the core network 20 (step S107, S108), and ACK is returned from the NW proxy apparatus 200 to the MTC-GW 100 (S109, S110). By receiving the ACK, the MTC-GW 100 can confirm that the concatenated data arrived at the NW proxy apparatus 200 without fail.

### <(2) PSM processing function>

Next, an operation example related to PSM processing (PSM-handling) of the MTC-GW 100 is described with reference to a sequence diagram shown in Fig. 4.

The MTC terminal 40 performs registration to the MTC-GW 100 (step S201), and registration of the MTC terminal 40 is performed from the MTC-GW 100 to the NW proxy apparatus 200 (step S202). In the present operation example, according to the registration in step S201, the MTC-GW 100 can hold destination information for communication of each MTC terminal under the MTC-GW 100, and capability information indicating whether PSM (power saving mode) is supported.

In step S203, the MTC-GW 100 notifies the NW proxy apparatus 200 of an MTC terminal that supports PSM. Here, for example, an ID of an MTC terminal that supports PSM is notified. When there are a plurality of IDs (example: 1∼n), these can be transmitted by concatenating them. The NW proxy apparatus 200 that receives the notification of step S203 returns concatenated ACK (1∼n) to the MTC-GW 100 (step S204).

If the support information is notified to the NW proxy apparatus 200 without existence of the MTC-GW 100, each MTC terminal needs to notify the NW proxy apparatus 200 of information via the RAN, so that there is a problem in that network load and load of NW proxy apparatus 200 and the like become high. On the other hand, in the present embodiment, since the MTC-GW 100 that can accommodate a plurality of MTC terminals notifies of the support information collectively (as a concatenated form), the above-mentioned problem does not occur.

After step S204, the NW proxy apparatus 200 determines a use case on PSM. As an example, the NW proxy apparatus 200 recognizes, for example, that an MTC terminal under the MTC-GW 100 that transmits the notification exists in a place where charging is difficult, and determines to cause the MTC terminal to perform PSM control by which power is not consumed as much as possible.

After that, in step S206, a scenario on PSM control is notified from the NW proxy apparatus 200 to the MTC-GW 100. The scenario is, for example, a scenario corresponding to "performing PSM control in which power is not consumed as much as possible".

In step S207, the MTC-GW 100 determines a policy of PSM control. The policy is, for example, a policy of "entering PSM when uplink data does not occur for a predetermined period", and a short value is set as the "predetermined period" according to the scenario of "executing PSM control in which power is not consumed as much as possible". The policy may be a policy that is different for each individual MTC terminal, or may be a policy common to MTC terminals under the MTC-GW 100.

Other than the above-mentioned scenario, a scenario for directly designating "predetermined period" may be used.

The MTC-GW 100 notifies the NW proxy apparatus 200 of the PSM policy determined in step S207, and receives ACK (step S208). Accordingly, the NW proxy apparatus 200 can ascertain the PSM policy in the MTC terminal side, and as a result, the NW proxy apparatus 200 can always determine whether each MTC terminal is in PSM or not. Therefore, for example, the NW proxy apparatus 200 can perform control of buffering downlink data without transmitting it to an MTC terminal in PSM.

In step S209, the MTC-GW 100 notifies each MTC terminal (MTC terminal 40 in Fig. 4) of the determined PSM policy, receives ACK from each MTC terminal, and transmits concatenated ACK (when receiving ACK from a plurality of MTC terminals) to the NW proxy apparatus 200 (steps S209∼S211). Each MTC terminal that receives the PSM policy executes operation of PSM according to the policy.

### <(3) NW proxy apparatus cooperation function>

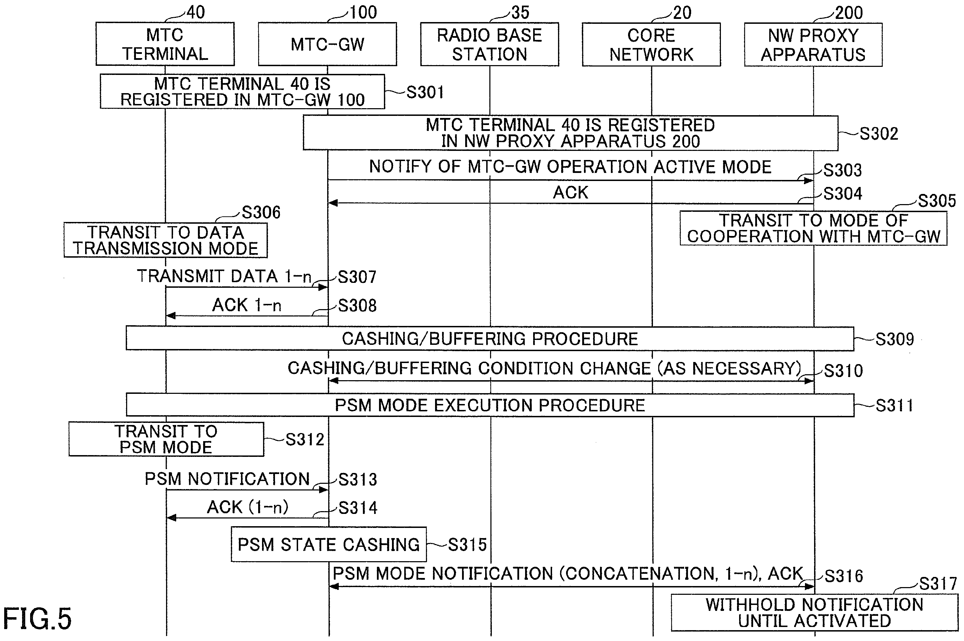

Next, an operation example related to cooperation (Interworking) between the MTC-GW 100 and the NW proxy apparatus 200 is described with reference to a sequence diagram shown in Fig. 5.

The MTC terminal 40 performs registration to the MTC-GW 100 (step S301), and registration of the MTC terminal 40 is performed from the MTC-GW 100 to the NW proxy apparatus 200 (step S302).

In this operation example, the MTC-GW 100 has an active mode in which the MTC-GW 100 operates as a gateway apparatus between the MTC terminal and the mobile communicaiton network and a non-active mode in which the MTC-GW 100 does not perform the operation. Switching between the modes may be performed advance static configuration or the switching may be dynamically performed based on the number of MTC terminals connected under the MTC-GW 100. As an example, an operation can be performed in which, when MTC terminals the number of which is equal to or greater than a predetermined threshold are connected under the MTC-GW 100, the MTC-GW 100 becomes the active mode, and when the number of connected MTC terminals becomes less than the threshold, the MTC-GW 100 becomes the non-active mode.

The MTC-GW 100 notifies the NW proxy apparatus 200 that the MTC-GW 100 itself is in an active mode (step S303), and receives ACK from the NW proxy apparatus 200 (step S304). By the notification, the NW proxy apparatus 200 can ascertain that the MTC-GW 100 is in an active mode, so that the NW proxy apparatus 200 can perform operation on the assumption that the MTC-GW 100 is operating as a gateway apparatus. For example, by ascertaining that the MTC-GW 100 operates as a gateway apparatus, it becomes unnecessary that the NW proxy apparatus 200 performs operation of assigning IP addresses to each MTC terminal under the MTC-GW.

The NW proxy apparatus 200 that confirms that the MTC-GW 100 is in an active mode enters an MTC-GW cooperation mode in step S305, and transmits data addressed to an MTC terminal under the MTC-GW to the MTC-GW 100.

In this example, the MTC terminal 40 is in PSM initially, and in step S306, the state is changed to a data transmission mode. This corresponds, for example, to a case where a predetermined amount of data to transmit occurs.

In steps S307-S309, as described in steps S104∼S110 shown in Fig. 3, buffering and concatenated data transmission and the like are performed.

In the present operation example, after that, the NW proxy apparatus 200 detects that change occurs in the condition of buffering/cashing, so that the NW proxy apparatus 200 notifies the MTC-GW 100 of the changed condition (step S310). As an example of change, there is an example in which, for example, when there is a request, from the AS 10, to receive data more frequently, buffering cycle is shortened according to the request (buffering amount is decreased). This corresponds, for example, to a situation to accelerate transmission by shortening the buffering cycle when demand for real time data communication becomes high.

In step S311, PSM processing similar to that in steps S203∼S211 of Fig. 4 is performed.

In step S312, a plurality of MTC terminals 40 enter PSM. Each MTC terminal (1∼n) notifies the MTC-GW 100 of entering PSM (step S313), and receives ACK from the MTC-GW 100 (step S314).

In step S315, the MTC-GW 100 stores (cashes) information received in step S313, that is, information of an MTC terminal entering PSM (information indicating which MTC terminal has entered PSM), and when information of a predetermined number of MTC terminals is stored, the MTC-GW 100 notifies the NW proxy apparatus 200 of the information by concatenation (step S316).

The MTC terminal 40 that has entered PSM cannot perform transmission and reception of data. Therefore, the NW proxy apparatus 200 does not transmit data addressed to the MTC terminal 40 that has entered PSM to the MTC-GW 100. Since it is useless to transmit data to the MTC terminal 40 that has entered PSM, even when the NW proxy apparatus 200, that receives the PSM notification in step S316, receives data addressed to the MTC terminal 40 that has entered PSM, the NW proxy apparatus 200 does not transmit the data to the MTC-GW 100. However, this is an example, and depending on an operation policy, there is a case where the NW proxy apparatus 200 actively transmits, to the MTC-GW 100, even data addressed to the MTC terminal 40 entering PSM. The case is, for example, a case where storing capacity of the MTC-GW 100 is large, or a case where it is necessary to receive data from the NW proxy apparatus 200 as quickly as possible when the MTC terminal 40 enters a data transmission mode from PSM, or the like.

### <Apparatus configuration example>

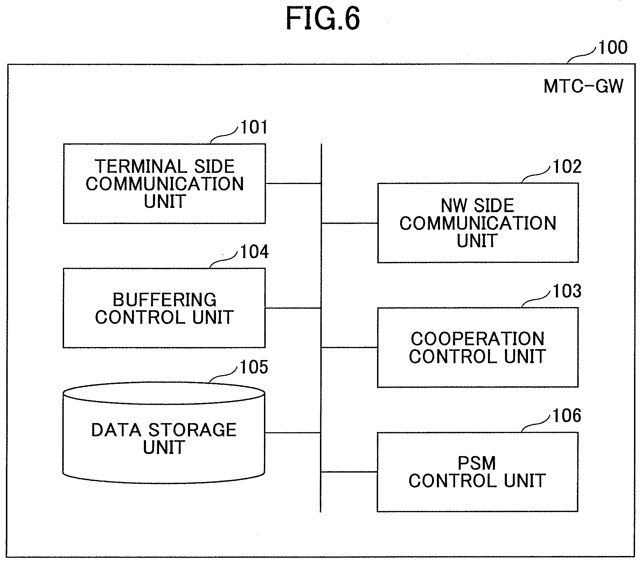

Fig. 6 is a diagram showing a configuration example of the MTC-GW 100 in the first embodiment. As shown in Fig. 6, the MTC-GW 100 includes a terminal side communication unit 101, a NW side communication unit 102, a cooperation control unit 103, a buffering control unit 104, a data storage unit 105 and a PSM control unit 106. The configuration shown in Fig. 6 is merely an example. Any functional segmentations and any names of functional units can be used as long as the MTC-GW 100 can execute processing described in the present embodiment.

The terminal side communicaiton unit 101 is a functional unit configured to perform communication with the MTC terminal 40, and includes a function for registration of the MTC terminal 40. The NW side communicaiton unit 102 is a functional unit configured to perform communication with mobile communicaiton network side, and includes a function for performing connection/registration to the NW proxy apparatus 200 and/or other external apparatuses (AS), a function for setting a bearer, a protocol conversion function and the like.

The cooperation control unit 103 includes functions configured to receive various types of control information (condition, scenario and the like) from the NW proxy apparatus 200 (it may be an AS 10), to instruct a corresponding functional unit to perform control based on received information, and to perform various types of notification (operation activation, PSM terminal notification and the like) to the NW proxy apparatus 200 (it may be an AS 10).

The buffering control unit 104 performs control of buffering of data received from the MTC terminal 40, and data received from the NW proxy apparatus 200 and the like. For example, the buffering control unit 104 performs control described in step S106 of Fig. 3. The data storage unit 105 is a functional unit such as a memory forming a buffer (cash) for temporarily storing data received from the MTC terminal 40, and data received from the NW proxy apparatus 200, and the like.

The PSM control unit 106 performs PSM control for the MTC terminal 40. For example, the PSM control unit 106 performs control on PSM described in steps S206∼S211 of Fig. 4 and steps S313∼S316 of Fig. 5 and the like.

The MTC-GW 100 of the present embodiment can be realized by causing an apparatus, having a plurality of communication interfaces and a configuration of a computer, to execute a program describing processing content described in the present embodiment. More specifically, functions of the MTC-GW 100 can be realized by executing a program corresponding to processes performed by the MTC-GW 100, by using hardware resources such as a CPU (processor), a memory and a hard disk included in the computer. It is possible to preserve and distribute the program by recording the program in a computer readable recording medium (such as a portable memory). Also, it is possible to provide the program via a network such as the Internet and an email. Also, it is possible to realize each functional unit of the MTC-GW 100 by using hardware circuits.

The point that the MTC-GW 100 can be realized by a program and/or hardware circuits as mentioned above also applies to the second embodiment.

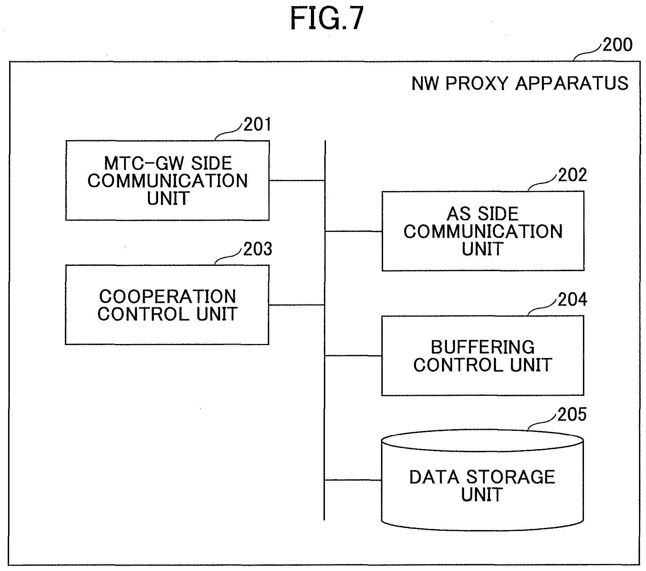

Fig. 7 shows a configuration example of the NW proxy apparatus 200 in the first embodiment. As shown in Fig. 7, the NW proxy apparatus 200 includes an MTC-GW side communication unit 201, an AS side communicaiton unit 202, a cooperation control unit 203, a buffering control unit 204 and a data storage unit 205. The configuration shown in Fig. 7 is merely an example. Any functional segmentations and any names of functional units can be used as long as processing described in the present embodiment can be executed.

The MTC-GW side communicaiton unit 201 is a functional unit configured to perform communicaiton with the MTC-GW 100 side. The MTC-GW side communication unit 201 also includes a registration function of the MTC terminal and the MTC-GW. By the way, Fig. 7 shows a configuration especially focusing on performing communicaiton with the MTC-GW. The NW proxy apparatus 200 also includes a function for performing communication with the MTC terminal 40. The AS side communication unit 202 is a functional unit configured to perform communicaiton with an AS.

The cooperation control unit 203 includes functions configured to transmit, to the MTC-GW 100, various types of control information (condition, scenario and the like), and to receive, from the MTC-GW 100, various types of notification information (active information, PSM information and the like).

The buffering control unit 204 performs control of buffering of data received from the AS and data received from the MTC-GW 100 and the like. The data storage unit 205 is a functional unit such as a memory forming a buffer for temporarily storing data received from the AS, and data received from the MTC-GW 100, and the like.

The NW proxy apparatus 200 of the present embodiment can be realized by causing one or a plurality of computers to execute a program describing processing content described in the present embodiment. That is, functions of the NW proxy apparatus 200 can be realized by executing a program corresponding to processes performed by the NW proxy apparatus 200, by using hardware resources such as a CPU (processor), a memory and a hard disk included in the computer. It is possible to preserve and distribute the program by recording the program in a computer readable recording medium (such as a portable memory). Also, it is possible to provide the program via a network such as the Internet and an email.

### <Summary of the first embodiment>

As described above, according to the first embodiment, there is provided a gateway apparatus provided between a radio base station in a mobile communication network and a terminal apparatus, including:
notification means configured to notify a proxy apparatus, connected to the mobile communication network as an external apparatus, of information indicating that the gateway apparatus is activated; and
storing control means configured to temporarily store data sequentially received from the terminal apparatus in data storage means, and after that, to transmit the data stored in the data storage means to the proxy apparatus.

According to the above configuration, it becomes possible to efficiently accommodate, in a mobile communication network, a terminal apparatus that performs communication with an external apparatus connected to the mobile communication. That is, according to the above configuration, existence of an activated gateway apparatus can be notified to an external apparatus (proxy apparatus), so that the proxy apparatus can perform cooperation operation cooperating with buffering function and the like in the gateway apparatus, and efficient communication (accommodation) can be executed.

The notification means can be configured to receive information, from the terminal apparatus, indicating that the terminal apparatus transits to a power saving mode, and to notify the proxy apparatus of the information. According to this configuration, the proxy apparatus can ascertain that the terminal apparatus transits to a power saving mode.

The notification means may be configured, when receiving the information from a plurality of terminal apparatuses, to notify the proxy apparatus of information of the plurality of terminal apparatuses as a whole. According to this configuration, notification to the proxy apparatus can be performed efficiently.

The gateway apparatus may include transmission means configured to transmit, to the terminal apparatus, control information for controlling operation of a power saving mode in the terminal apparatus. According to this configuration, it is possible to control operation on the power saving mode for the terminal apparatus.

The transmission means may be configured to determine control information to transmit to the terminal apparatus based on control information received from the proxy apparatus. According to this configuration, control that cooperates with the proxy apparatus can be realized.

The gateway apparatus may include reception means configured to receive, from the proxy apparatus, control information used by the storing control means for performing processing of the storing. According to this configuration, control that cooperates with the proxy apparatus can be realized.

The control information is, for example, a time cycle for executing data transmission to the proxy apparatus, or a buffer amount that becomes a trigger for executing data transmission to the proxy apparatus. According to this configuration, operation on buffering can be properly controlled.

### (Second embodiment)

Next, a second embodiment is described. In the second embodiment, (4) bearer setting method determination function, and (5) raw data processing function are described in detail. By the way, each apparatus described in the following may be provided with the function of the second embodiment in addition to the function described in the first embodiment, or may be provided with the function for executing only the second embodiment.

### <(4) bearer setting method determination function>

In the following, determination of the bearer setting method executed by the MTC-GW 100 is described. More specifically, "bearer" is RAB (radio access bearer), which is a logical packet communication route between the MTC-GW 100 and the radio base station 35. The bearer may be considered as a bidirectional communicaiton band. Also, in the present embodiment, in a bearer between the MTC-GW 100 and the radio base station 35, the transmittable maximum bit rate (the size of the pipe) in each of the uplink and the downlink is a value predetermined according to capability and band allocation policy of the radio base station 35. In order that the MTC-GW 100 performs data communication as an in-between via the mobile communicaiton network, it is necessary that a bearer is set.

As already described, the MTC-GW 100 is placed between the radio base station 35 and the MTC terminal 40, and is provided with a function for buffering data transmitted from the MTC terminal 40 and the like. Also, there is a case where the MTC terminal 40 does not perform transmission and reception of data by entering PSM. Therefore, in a use case where real time processing is not required for data transmission, it is unnecessary that a bearer is always set between the MTC-GW 100 and the radio base station 35. By setting a bearer, a radio resource and a memory resource and the like are kept in the MTC-GW 100 and the radio base station 35. Thus, it uselessly consumes resources to set a bearer even when transmission and reception of data are scarce and small.

On the other hand, since transmission and reception of control signals occur in a radio section and in the core network for setting/deleting a bearer, it is not desirable to frequently perform setting/deleting of a bearer even for no-real time data.

The above-mentioned resource consumption and the amount of transmission and reception of control signals and the like can be considered to be a cost for bearer setting. In the present embodiment, the MTC-GW 100 determines a bearer setting method according to a type of communicaiton executed by the MTC terminal 40.

Also, especially, as to a service having no real time property, the MTC-GW 100 determines an optimum bearer setting method so as to minimize a total amount of a cost required for setting and deleting a bearer and a cost required for continuously setting the bearer. The "total amount" is a cost total amount after proper processing is performed on each of the costs such that a sum of the two costs can be calculated. For example, in a case where the number of times of bearer setting/deleting in a predetermined unit time is "cost required for setting and deleting a bearer" and a period during which a bearer continues to be set in a predetermined unit time is "cost required for continuously setting the bearer", these cannot be simply added. Thus, a calculation method that can calculate the cost total amount is used by adding weight to each cost, or the like.

Also, "bearer setting method" to be determined is, for example, a time interval for setting a bearer, a buffer amount that triggers setting of a bearer (that triggers transmission of data), and the like.

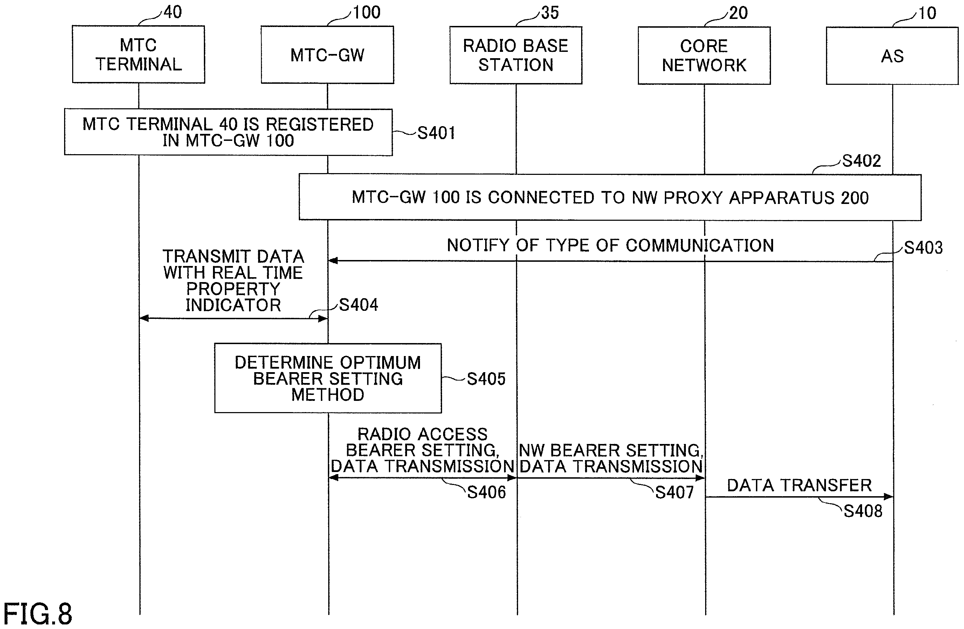

Concrete processing content is described with reference to Fig. 8. In the second embodiment, an apparatus outside the core network may be a normal AS 10, or may be the NW proxy apparatus 200 described so far. Fig. 8 shows an example of the case of the AS 10.

The MTC terminal 40 performs registration to the MTC-GW 100 (S401). Also, the MTC-GW 100 connects to the AS 10 based on an APN (connection destination point name) corresponding to the AS 10 (5402).

The AS 10 (this may be the NW proxy apparatus 200) notifies the MTC-GW 100 of a communication type (step S403). The communicaiton type notified here is information indicating, for example, time criticality (degree of urgency), time tolerance (time tolerance, how large delay is allowed from when data occurs until the data arrives at the AS) and the like. The degree of urgency and the time tolerance may be collectively called real time property. The information of the real time property (to be referred to as real time property indicator) may be a tolerant delay time itself, or may be information indicating a degree of tolerant delay time (real time property : large, real time property : medium, real time property : small).

In a case where the MTC-GW 100 can obtain information, from the MTC terminal 40, similar to the information obtained in step S403, the notification of step S403 may not be performed. In the present operation example, in a case where a real time property indicator can be obtained from a plurality of MTC terminals 40, it is assumed that a common real time property indicator is obtained.

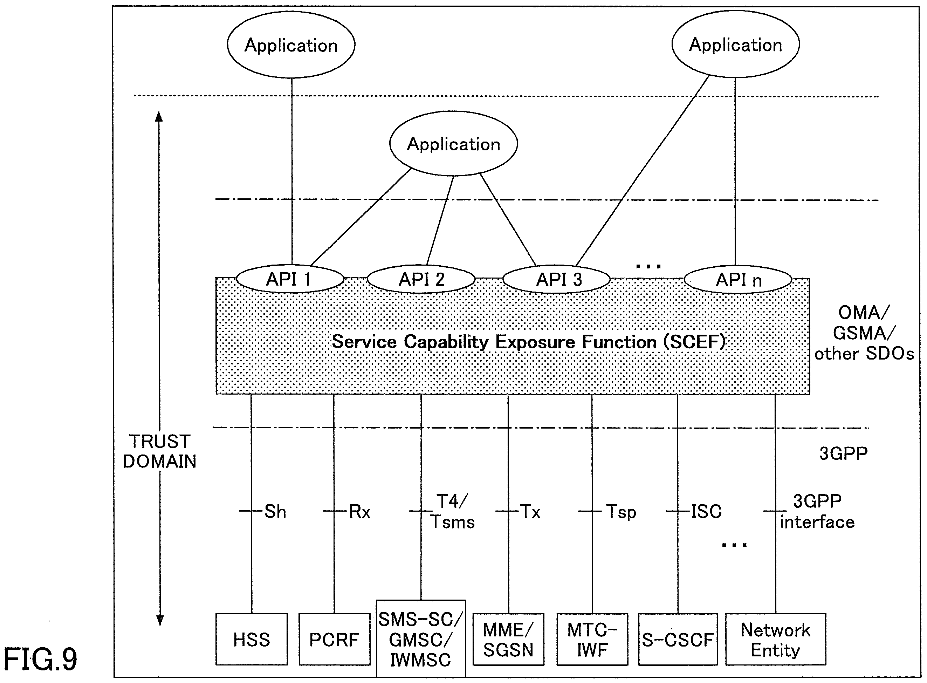

The notification of step S403 may be performed by using a function called SCEF (Service Capability Exposure Function). Fig. 9 shows an outline of SCEF. As shown in Fig. 9, the SCEF is a framework for providing a third party with a service function of 3GPP.

Returning back to Fig. 8, in step S404, the MTC terminal 40 transmits data together with an indicator indicating real time property. The MTC-GW 100 may obtain the indicator indicating the real time property by transmitting a request to the MTC terminal 40. By the way, in a case where a real time property indicator is notified from the AS 10 in step S403, the indicator indicating the real time property may not be obtained from the MTC terminal 40.

Also, the MTC-GW 100 may obtain or estimate real time property based on an APN corresponding to the connection destination (AS 10), so that any of the notification in step S403 and the notification of real time property indicator from the MTC terminal 40 may not be performed.

All of or any two of the notification of the real time property indicator of step S403, the notification of the real time property indicator from the MTC terminal 40, and obtaining/estimating of real time property from the APN may be performed. When a plurality of real time property indicators are obtained, for example, a real time property indicator of a safe side (larger real time property) can be used.

In step S405, the MTC-GW 100 determines a bearer setting method. In the following, a determination example of a bearer setting method is described.

### (a) Example 1 of bearer setting method determination

In the example 1 of bearer setting method determination, when the MTC-GW 100 detects that real time property is high as the real time property indicator, the MTC-GW 100 determines to perform bearer setting to continue bearer setting unless a period (time length) during which data is not received from any MTC terminal 40 continues for equal to or greater than a predetermined threshold (first threshold). After disconnecting the bearer, when data is received from any MTC terminal 40, the bear is set again.

High real time property corresponds, for example, to a case where allowable delay time is equal to or less than a predetermined value, a case where a service estimated from the APN (name) can be determined to be a service that requires real time communication, or the like. As to determination based on APN, for example, the MTC-GW 100 may store a table indicating real time communication or not for each APN so as to perform the determination by referring to the table.

### (b) Example 2 of bearer setting method determination

In the bearer setting method determination example 2, the MTC-GW 100 detects that real time property is lower than that of the case of (a) as real time property indicator. In this case, the MTC-GW 100 determines to perform bearer setting to continue bearer setting unless a period (time length) during which data is not received from any MTC terminal 40 continues for equal to or greater than a predetermined threshold (second threshold (<first threshold)). As to the case of (b), since the threshold is lower than that of the case of (a), setting/deleting of a bearer is performed more frequently than the case of (a). The real time property of the case of (b) is lower than that of the case of (a). Thus, if data transmission is delayed due to bearer setting processing so that the case where data transmission is performed after the data is buffered increases, it is allowed. Here, since instantaneous transmission of data is not performed, transmission data may be transmitted to the radio base station side by adding measurement time (example: time at which measurement data is received from the terminal, measurement time notified from the terminal by being added to data, or the like) to the transmission data. Accordingly, difference between transmission time and measurement time can be resolved. It can be also applied to the following case of (c) to add measurement time to transmission data and to transmit the transmission data to the radio base station side.

Low real time property in the case of (b) corresponds, for example, to a case where allowable delay time is larger than that of the case of (a) but equal to or less than a predetermined value.

### (c) Example 3 of bearer setting method determination

In the bearer setting method determination example 3, the MTC-GW 100 detects that there is no-real time property as the real time property indicator. No real time property corresponds, for example, to a case where the allowable delay time is very long, such as equal to or greater than 1 day, or the like.

In this case, the MTC-GW 100 determines a bearer setting method based on a value of communication state of data by the MTC terminal 40 until the time point when the determination is performed, and a buffer storing maximum amount of the MTC-GW 100 itself, and the like. The communication state is, for example, data communication interval of each MTC terminal, data rate of each MTC terminal, or the like. The data rate (radio communication band size) of the bearer is also considered.

That is, the MTC-GW 100 can determine a bearer setting method, so as to minimize a cost required for setting and deleting a bearer and a cost required for continuously setting a bearer, based on one or more of data rate of data transmitted from each MTC terminal 40, data transmission frequency from each MTC terminal 40, a maximum data rate of the bearer, and a buffer maximum amount.

For example, in terms of communication fee and the like, in a case where, as a policy, the time during which a bearer is set is desired to be short as much as possible (that is, in a case where the cost for bearer continuation is large), the MTC-GW 100 determines a bearer setting method of sequentially buffering data received from the MTC terminal 40, setting a bearer when the buffer amount becomes the buffer maximum amount, and deleting the bearer when all data in the buffer is transmitted. According to this operation, the cost of bearer continuation can be decreased while utilizing the buffer at the maximum.

Also, for example, in terms of a policy of decreasing the control signal amount as much as possible, in a case where the number of times of bearer setting/deletion is desired to be small as much as possible (that is, when the cost of bearer setting/deletion is large), it can be considered that the MTC-GW 100 determines a bearer setting method of continuing the bearer as long as there is data from the MTC terminal 40.

The above-mentioned policy is included, for example, in a requirement notified in S103 of Fig. 3 (or determined by negotiation).

Although (a)∼(c) have been described, these are merely examples. Determination can be made by other methods. Also, the MTC-GW 100 transmits a service request to the mobile communication network so that the bearer setting is executed , for example. An existing technique can be used as a bearer setting method itself. In steps S406∼S408, bearer setting and data transmission are performed.

### <Raw data processing function>

Next, raw data processing executed by the MTC-GW 100 is described.

The MTC-GW 100 may transmit data (raw data) collected from the MTC terminal 40 to the NW as it is. However, in a case where data required in the AS 10 side (it may be the NW proxy apparatus 200) is not raw data itself, there is a possibility in that it becomes waste of radio resources and the like to transmit the raw data to the radio base station side.

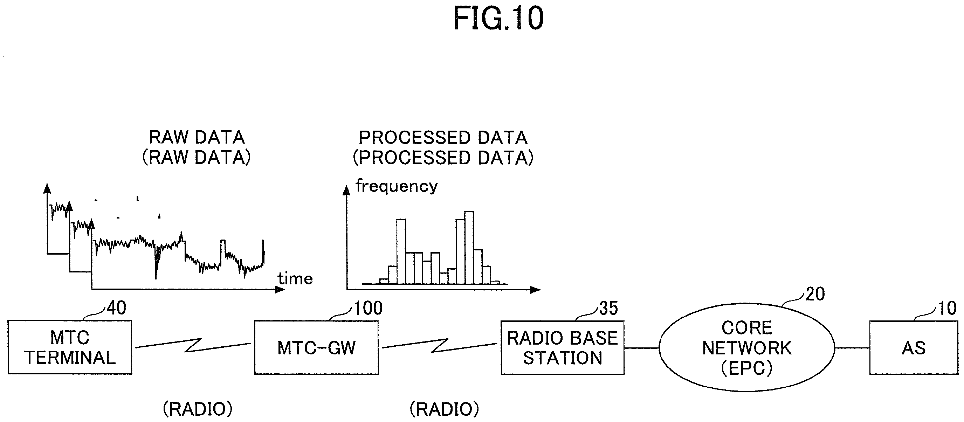

Therefore, as shown in Fig. 10, in the present example, the MTC-GW 100 performs, for example, statistical processing on the raw data received from the MTC terminal 40 so that the MTC-GW 100 can transmit data processed by the statistical processing to the radio base station side.

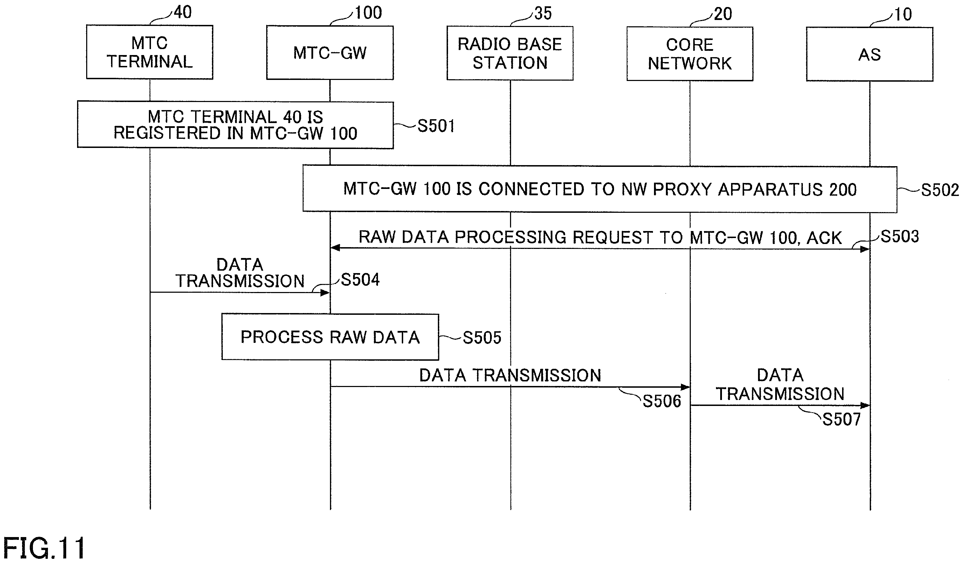

An operation example on raw data processing is described with reference to Fig. 11. The MTC terminal 40 performs registration to the MTC-GW 100 (S501). Also, the MTC-GW 100 connects to the AS 10 based on an APN (connection destination point name) corresponding to the AS 10 (S502).

The AS 10 (it may be the NW proxy apparatus 200) transmits a raw data processing request to the MTC-GW 100, and the MTC-GW 100 returns ACK (step S503). The raw data processing request here includes a data type to output, a processing scheme, processing interval and the like. The data type to output indicates, for example, a format of output data (example: CSV and the like). The processing scheme indicates, for example, content of statistical processing (example: average value per a unit time). The processing interval indicates a cycle for outputting a statistical value (example: every 1 hour). Also, the content of the statistical processing may be a statistical value of data for each MTC terminal, or may be a statistical value of the whole MTC terminals. Content of these are also specified from the AS 10. However, it is merely an example that the raw data processing request is specified from the AS 10 and the like. The raw data processing request may be specified from another terminal and the like.

In step S504, the MTC-GW 100 sequentially receives data from the MTC terminal 40 and buffers it. When a timing that is specified by the processing interval arrives, the MTC-GW 100 performs statistical processing on the buffered data (step S505), and transmits the processed data to the AS 10 (steps S506, S507).

The data obtained by performing statistical processing on raw data becomes a small size, in general, compared to the raw data. Thus, according to the above-mentioned processing, the network load and the AS 10 side load and the like can be decreased.

### <Apparatus configuration example>

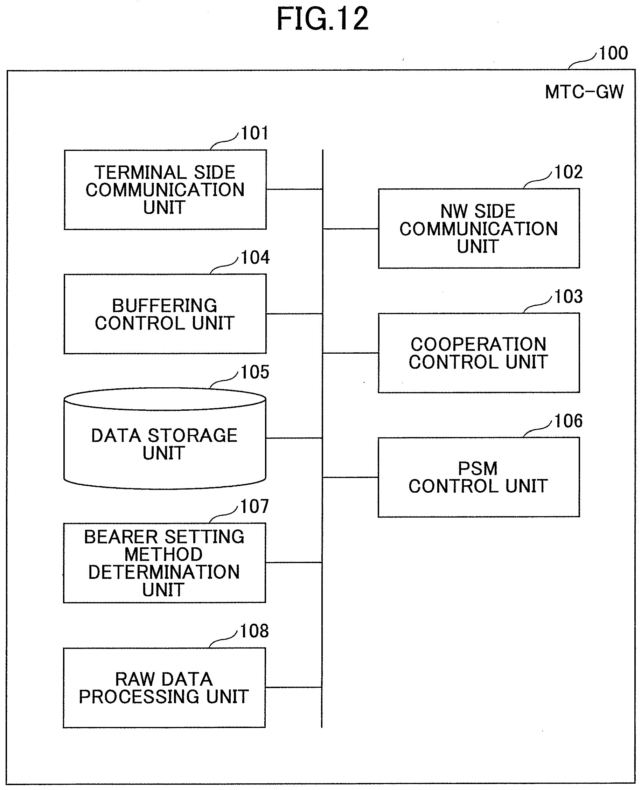

Fig. 12 is a diagram showing a configuration example of the MTC-GW 100 in the second embodiment. As shown in Fig. 12, the MTC-GW 100 includes a terminal side communication unit 101, a NW side communication unit 102, a cooperation control unit 103, a buffering control unit 104, a data storage unit 105, a PSM control unit 106, a bearer setting method determination unit 107 and a raw data processing unit 108. The configuration shown in Fig. 12 is merely an example. Any functional segmentations and any names of functional units can be used as long as processing described in the present embodiment can be executed. Although Fig. 12 shows an example having both of the function of the first embodiment and the function of the second embodiment, it may have functions that can execute processing in the second embodiment without having the function described in the first embodiment (excluding functions necessary for the second embodiment).

Each functional unit indicated by 101∼106 has the function described with reference to Fig. 6 in the first embodiment.

The bearer setting method determination unit 107 is a functional unit configured to determine a bearer setting method as described in steps S403∼S405 and the like of Fig. 8. The raw data processing unit 108 is a functional unit configured to process and transmit raw data as described in steps S503∼S506 of Fig. 11.

The MTC-GW 100 can be realized, for example, by using a configuration of a computer that includes a CPU and a memory, and that is realized by the program being executed by the CPU (processor).

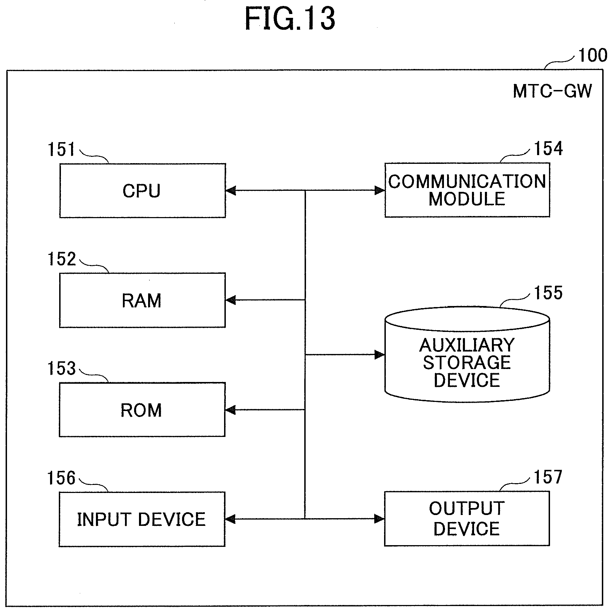

Fig. 13 shows an example of a hardware (HW) configuration of the MTC-GW 100 in a case where the MTC-GW 100 is realized by the above-mentioned computer. As to the HW configuration, the MTC-GW 100 and the NW proxy apparatus 200 in the first embodiment have the same configuration as that shown in Fig. 13.

As shown in Fig. 13, the MTC-GW 100 includes a CPU 151, a RAM (Random Access Memory) 152, a ROM (Read Only Memory) 153, a communication module 154 for performing communication, an auxiliary storage device 155 such as a hard disc and the like, an input device 156 and an output device 157.

The CPU 151 reads a program stored in the RAM 152, the ROM 153, the auxiliary storage device 155 or the like, and executes the program so that operation of each function of the MTC-GW 100 is executed. As to processing for performing communication, the communication module 154 is used. Also, by the input device 156, for example, input of setting information for the MTC-GW 100 can be performed. By the output device 157, for example, output of operating status and the like of the MTC-GW 100 can be performed.

### <Summary of the second embodiment>

As described above, according to the second embodiment, there is provided a gateway apparatus provided between a radio base station in a mobile communication system and a terminal apparatus, including:
storing control means configured to temporarily store data sequentially received from the terminal apparatus in data storage means, and after that, to transmit the data stored in the data storage means to an external apparatus connected to the mobile communication network; and
determination means configured to determine real time property of a service in the external apparatus and to determine a setting method of a bearer between the radio base station and the gateway apparatus based on the real time property.

According to the above-mentioned configuration, it becomes possible to efficiently accommodate a terminal apparatus, in a mobile communication network, that performs communication with an external apparatus connected to the mobile communication network.

The setting method of the bearer determined by the determination means is, for example, a time interval for setting the bearer, or a data amount that becomes a trigger for setting the bearer and that is temporarily stored in the data storage means. According to this configuration, the setting method of the bearer can be properly determined.

When it is determined that there is real time property in the service, the determination means may determine, as the setting method of the bearer, to continuously set the bearer as long as data is received from the terminal apparatus. According to this configuration, data that requires real time property can be quickly transmitted.

When determining that there is not real time property in the service, the determination means may determine the setting method of the bearer so as to minimize a cost required for setting and deleting a bearer and a cost required for continuously setting a bearer. According to this configuration, an optimum bearer setting method can be determined.

When determining that there is not real time property in the service, the determination means may determine the setting method of the bearer based on one or more of data rate of data transmitted from the terminal apparatus, data transmission frequency from the terminal apparatus, maximum data rate of the bearer, and maximum data amount that can be temporarily stored in the data storage means. According to this configuration, a proper bearer setting method based on a quantitative criteria can be determined.

For example, the determination means determines the real time property of the service based on information received from the external apparatus, determines the real time property of the service based on information received from the terminal apparatus, or determines the real time property of the service based on connection destination information that is used when connecting to the external apparatus. According to this configuration, real time property can be properly determined.

The gateway apparatus may include raw data processing means configured to perform predetermined processing on raw data received from the terminal apparatus and to transmit processed data to the external apparatus. According to this configuration, wasted raw data transmission can be decreased so that efficient communication becomes possible.

The raw data processing means may determine the predetermined processing based on control information received from the external apparatus. According to this configuration, proper processing can be performed according to a request from the external apparatus.

In the above, the first and the second embodiments of the present invention have been explained. However, the disclosed invention is not limited to the embodiments. Those skilled in the art will conceive of various modified examples, corrected examples, alternative examples, substituted examples, and the like. While specific numerical value examples are used to facilitate understanding of the present invention, such numerical values are merely examples, and any appropriate value may be used unless specified otherwise. Classification into each item in the description is not essential in the present invention, and features described in two or more items may be combined and used as necessary. Subject matter described in an item may be applied to subject matter described in another item (provided that they do not contradict).

It is not always true that the boundaries of the functional units or the processing units in the functional block diagram correspond to boundaries of physical components. The operations by the plural functional units may be physically performed by a single component. Alternatively, the operations by the single functional unit may be physically performed by plural components.

For convenience of explanation, the MTC-GW and the NW proxy apparatus have been explained by using functional block diagrams. However, such an apparatus may be implemented in hardware, software, or a combination thereof.

Each of the software that operates by a processor provided in the MTC-GW and the software that operates by a processor provided in the NW proxy apparatus according to an embodiment of the present invention may be stored in any proper storage medium such as a Random Access Memory (RAM), a flash memory, a Read Only Memory (ROM), an EPROM, an EEPROM, a register, a hard disk (HDD), a removable disk, a CD-ROM, a database, a server and the like.

The present invention is not limited to the above-mentioned embodiment and is intended to include various variations, modifications, alterations, substitutions and so on without departing from the spirit of the present invention.

The present patent application claims priority based on Japanese patent application No. 2015-074188, filed in the JPO on March 31, 2015, and the entire contents of the Japanese patent application No. 2015-074188 are incorporated herein by reference.

### DESCRIPTION OF REFERENCE SIGNS

- 10: AS
- 20: core network (EPC)
- 30: radio access network
- 35: radio base station
- 40: MTC terminal
- 100: MTC-GW
- 35: radio base station
- 20: core network (EPC)
- 200: NW proxy apparatus
- 101: terminal side communication unit
- 102: NW side communication unit
- 103: cooperation control unit
- 104: buffering control unit
- 105: data storage unit
- 106: PSM control unit
- 201: MTC-GW side communication unit
- 202: AS side communication unit
- 203: cooperation control unit
- 204: buffering control unit
- 205: data storage unit
- 107: bearer setting method determination unit
- 108: raw data processing unit
- 151: CPU
- 152: RAM
- 153: ROM
- 154: communication module
- 155: auxiliary storage device
- 156: input device
- 157: output device

## Claims

1. A gateway apparatus provided between a radio base station in a mobile communication network and a terminal apparatus, comprising:
notification means configured to notify a proxy apparatus, connected to the mobile communication network as an external apparatus, of information indicating that the gateway apparatus is activated; and
storing control means configured to temporarily store data sequentially received from the terminal apparatus in data storage means, and after that, to transmit the data stored in the data storage means to the proxy apparatus.

2. The gateway apparatus as claimed in claim 1, wherein the notification means is configured to receive information, from the terminal apparatus, indicating that the terminal apparatus transits to a power saving mode, and to notify the proxy apparatus of the information.

3. The gateway apparatus as claimed in claim 2, wherein the notification means is configured, when receiving the information from a plurality of terminal apparatuses, to notify the proxy apparatus of information of the plurality of terminal apparatuses as a whole.

4. The gateway apparatus as claimed in any one of claims 1-3, comprising:
transmission means configured to transmit, to the terminal apparatus, control information for controlling operation of a power saving mode in the terminal apparatus.

5. The gateway apparatus as claimed in claim 4, wherein the transmission means is configured to determine control information to transmit to the terminal apparatus based on control information received from the proxy apparatus.

6. The gateway apparatus as claimed in any one of claims 1-5, comprising:
reception means configured to receive, from the proxy apparatus, control information used by the storing control means for performing processing of the storing.

7. The gateway apparatus as claimed in claim 6, wherein the control information is a time cycle for executing data transmission to the proxy apparatus, or a buffer amount that becomes a trigger for executing data transmission to the proxy apparatus.

8. A communication method executed by a gateway apparatus provided between a radio base station in a mobile communication network and a terminal apparatus, comprising:
a notification step of notifying a proxy apparatus, connected to the mobile communication network as an external apparatus, of information indicating that the gateway apparatus is activated; and
a storing control step of temporarily storing data sequentially received from the terminal apparatus in data storage means, and after that, transmitting the data stored in the data storage means to the proxy apparatus.
